# EUROPEAN PATENT APPLICATION

(11) **EP 4 470 983 A1**
(43) Date of publication of application: **04.12.2024**
(21) Application number: 23177106.4
(22) Date of filing: 02.06.2023
(51) Int. Cl.: C04B 14/02, C04B 28/04, H01B 1/18

(54) **ELECTRICALLY CONDUCTIVE MINERAL BINDER COMPOSITIONS**

(71) Applicant: Sika Technology AG, 6340 Baar (CH)
(72) Inventor: DELLIÈRE, Pierre, 06100 Nice (FR); HERR, Olivier, 78510 Triel-sur-Seine (FR)
(74) Representative: Sika Patent Attorneys

(57) **Abstract**

A mineral binder composition, especially an electrically conductive mineral binder composition, comprises at least one mineral binder, carbon nanotubes and carbonaceous particles, the carbonaceous particles being chemically and/or physically different from the carbon nanotubes.

## Description

### Technical field

The invention is concerned with a mineral binder composition, especially an electrically conductive mineral binder composition. Furthermore, the invention is directed to a hardened article and objects based on a mineral binder composition. Furthermore, the invention relates to a method for heating a hardened article or an object and the use of a mineral binder composition or a hardened article for structural monitoring, electromagnetic shielding, electrostatic discharge protection, corrosion protection of steel reinforcement concrete structures, corrosion protection of steel reinforcement concrete structures, as an anti-static flooring and/or as a heating element for buildings or infrastructure constructions.

### Background art

Conventional mineral binder compositions, such as e.g. cement based mortars or concretes, are rather good electrical insulators having a high electrical resistivity.

For example, the electrical resistivity of concrete can vary depending on several factors, including the type of concrete mix, moisture content, temperature, and the presence of additives or reinforcing materials. However, as a general guideline, the electrical resistivity of typical concrete ranges from about 10⁴ to 10⁷ Ωm.

In contrast, electrically conductive concrete, also known as smart concrete, is a specialized type of concrete that has been modified to have electrical conductivity or a lower electrical resistivity than conventional concrete, respectively. Electrically conductive concrete can for example be used for structural monitoring, electromagnetic shielding, electrostatic discharge protection, corrosion protection of steel reinforcement concrete structures, as an anti-static flooring and/or as a heating element for buildings or infrastructure constructions.

The fundamental principle behind electrically conductive mineral binder compositions lies in the integration of conductive additives, such as carbon black or metallic particles, into the mineral binder composition. These additives establish a conductive network within the mineral binder composition, allowing the flow of electrical current through the material.

In this regard, US 2019/0218144 A1 (Pellenq et al.) describes for example a nanoporous carbon-loaded cement composite that conducts electricity. The nanoporous carbon-loaded cement composite can be used in a variety of different fields of use, including, for example, a structural super-capacitor as an energy solution for autonomous housing and other buildings, a heated cement for pavement deicing or house basement insulation against capillary rise, a protection of concrete against freeze-thaw (FT) or alkali silica reaction (ASR) or other crystallization degradation processes, and as a conductive cable, wire or concrete trace. Nanoporous carbons described are for example carbon black, multiwall carbon nanotubes, graphene flakes, activated porous carbons, and saccharose cokes.

Likewise, WO 01/72657 A1 (National Research Council of Canada) describes a conductive concrete suitable for commercial and large-scale production. The conductive concrete uses carbonaceous particles as conductive phase to achieve concrete with resistivities as low as 2 Ωcm. The conductive carbonaceous particles used as conductive phase may be carbon from many different sources, and may take the form of chunks or fibers. Preferred conductive carbonaceous particles are coke breeze, which is a side product of steel smelting.

Furthermore, WO 2012/143221 A1 (Henkel) describes a composition, comprising 5 to 90 wt.% of at least one inorganic binding agent, 0.1 to 10 wt.% soot and 0.1 to 15 wt.% carbon fibres, based on the total weight of the composition. The compositions can be used for producing a flat heating element, in particular for electrically heating floor, wall or ceiling surfaces.

However, known conductive mineral binder compositions are not completely convincing. Especially when it comes to heating applications, with known electrically conductive mineral binder compositions, it takes quite some time to obtain desired temperatures with known conductive mineral binder compositions.

Thus, there is still a need to develop improved solutions, which overcome the aforementioned drawbacks at least partly.

### Disclosure of the invention

It is an object of the present invention to provide improved solutions for electrically conductive mineral binder composition. Especially the solutions should allow for providing electrically conductive mineral binder composition that allows for producing hardened articles that can be heated more efficiently with a heating speed as high as possible. Also, the solutions should be as flexible as possible.

Surprisingly, it was found that these objects can be achieved with the composition according to claim 1. Specifically, the invention is concerned with a mineral binder composition, especially an electrically conductive mineral binder composition, comprising at least one mineral binder, carbon nanotubes and carbonaceous particles, the carbonaceous particles being chemically and/or physically different from the carbon nanotubes.

The inventive combination of carbon nanotubes and carbonaceous particles results in a synergistic interaction between the two types of different carbon-based materials. Especially, the heating speed of hardened articles made from the inventive mineral binder composition is drastically improved when compared to similar compositions comprising only one type of carbon-based materials.

Specifically, with the inventive composition it is possible to produce hardened articles that can be heated from room temperature to a desired temperature of 100°C when applying a voltage of only 40 Volts (V) within 10 minutes. When using only one type of carbon-based material but otherwise identical conditions, it already takes about 50 minutes to reach a temperature of 80°C.

Furthermore, the heating processes with hardened articles based on the inventive mineral binder composition are highly beneficial in terms of electrical power consumption.

Without wishing to be bound by theory, it is believed that the combination of different carbon-based materials greatly increases the number of contact points between conducting particles in the mineral binder composition. Thereby a percolating network is formed providing a continuous connection of conductive particles that have percolated the mineral binder composition to a sufficient degree to make the composition electrically conductive in such a way that resistive heating becomes possible in a highly efficient manner.

Furthermore, the inventive mineral binder compositions can be realized with different properties, e.g. by choosing specific mineral binders, and optionally adding aggregates and/or additives. This allows for controlling processing properties as well as properties of hardened articles made of the inventive compositions in a broad range.

Specifically, the inventive compositions or hardened articles made therefrom can be used for very different applications such as inter alia (i) heating of buildings and infrastructure constructions, e.g. with floor heating screeds and/or heating panels (ii) deicing and snow melting, e.g. on roadways, bridges, sidewalks, stairs, roofs and airport runways, (iii) electrical grounding and earthing, (iv) electrostatic discharge (ESD) protection, (v) structural monitoring of buildings and infrastructure constructions, and (vi) electromagnetic shielding.

Overall, the inventive mineral binder compositions are highly beneficial and can be used for numerous applications.

Further aspects of the present invention are subject of further independent claims and/or outlined throughout the description and the dependent claims.

### Ways of carrying out the invention

A first aspect of the present invention is directed to a mineral binder composition, especially an electrically conductive mineral binder composition, comprising at least one mineral binder, carbon nanotubes and carbonaceous particles, the carbonaceous particles being chemically and/or physically different from the carbon nanotubes.

A "mineral binder composition" as used in the context of the present invention refers to a mixture comprising at least one mineral binder. It is possible, and in the context of the present invention also preferred, that the mineral binder composition additionally comprises aggregates and/or other additives.

A mineral binder composition of the present invention can be essentially free of water and be present in dry form. A mineral binder composition of the present invention can likewise comprise part or all of the mixing water and be present as a fluid or in stiffened form.

In particular, in dry state, the mineral binder composition might not be electrically conductive. It might be required to mix the mineral binder composition with mixing water and/or cure the mineral binder composition to obtain an electrically conductive mineral binder composition.

For the present purposes, the term "particles" refers, in particular, to solids having an average particle size of less than 1000 µm, in particular less than 500 µm. The particle size, the distribution thereof or the average particle size can be determined, in particular, by laser light scattering, preferably in accordance with the standard ISO 13320:2009. In particular, a Mastersizer 2000 instrument with a dispersing unit Hydro 2000G and the software Mastersizer 2000 from Malvern Instruments GmbH (Germany) can be used for this purpose. The average or mean particle size corresponds in the present case to the D50 value (50% of the particles are smaller than the indicated value, 50% are accordingly larger).

Carbon nanotubes (CNT) are tubes essentially made of carbon with diameters typically in the range of less than 100 nm.

Especially, the carbon nanotubes are selected from single-wall carbon nanotubes (SWCNT), multi-wall carbon nanotubes (MWCNT) and/or nanotubes with undetermined carbon-wall structure.

In particular, although not produced in this manner, one can imagine single-wall carbon nanotubes as cutouts from a two-dimensional hexagonal lattice of carbon atoms rolled up along one of the Bravais lattice vectors of the hexagonal lattice to form a hollow cylinder. Multi-wall carbon nanotubes usually consist of nested single-wall carbon nanotubes weakly bound together by in a tree ring-like structure.

In contrast to carbon nanotubes, carbon fibers are solid strands of carbon atoms. In particular, carbon fibers are made of losely packed layers of graphite sheets stacked parallel to one another. Thus, although based on the same atom type, i.e. carbon, carbon fibers are structurally very different from carbon nanotubes. Usually individual carbon fibers have a diameter of about 5 to 10 µm.

Especially preferred, the carbon nanotubes used in the inventive composition are single-wall carbon nanotubes. These types of carbon nanotubes turned out to be highly beneficial in terms of increasing the conductivity of the mineral binder composition. However, other carbon nanotubes might be used as well.

The carbon nanotubes preferably have an outer mean diameter of about 0.4 - 25 nm, especially 0.6 - 10 nm, for example 1 - 5 nm, in particular 1.2 - 2.0 nm. The outer diameter can e.g. be measured by optical absorption in line with standard ISO/TS 10868:2017.

Preferably, the carbon nanotubes have a mean length of at least 0.5 µm, especially of at least 1 µm, in particular of at least 4 µm, especially of at least 5 µm. For example, the carbon nanotubes have a mean length of 0.5 - 5'000 µm, especially 1 - 1'000 µm, for example >5 - 100 µm. Lengths of the carbon nanotubes can be measured by standard atomic force microscopy (AFM).

In particular, an average aspect ratio, i.e. the average ratio of the length to diameter of the carbon nanotubes, is at least 100, in particular at least 1'000, especially at least 2'500, for example at least 3'000.

A specific surface area of the carbon nanotubes preferably is at least 100 m²/g, especially at least 200 m²/g, in particular at least 300 m²/g, for example 300 - 1'000 m²/g or 300 - 600 m²/g. The specific surface can be determined by BET surface area analysis with N₂ in a conventional manner known to the skilled person.

Carbon nanotubes with such dimensions and properties have proven to be especially beneficial in terms of efficiently increasing the conductivity in mineral binder compositions in combination with the further carbonaceous particles.

Highly preferred, the carbon nanotubes have G/D ratio of > 10, especially > 50, in particular > 70, for example > 90. The G/D ratio defines the intensity ratio of the intensity of the peak around 1590 cm⁻¹ (G band) to the intensity of the peak around 1350 cm⁻¹ (D band) in the Raman spectrum of the carbon nanotubes. The peak around 1590 cm⁻¹ originates from the in-plane vibration of the six-membered ring common to carbon-based substances. The peak around 1350 cm⁻¹ originates from defects in the carbon nanotubes. The intensity G/D ratio can be used as an indicator of the amount of defects in a carbon nanotube. The larger the G/D ratio the less defects are present in the carbon nanotube.

Carbon nanotubes having a G/D ratio as defined above have a low density of defects, which in turn has proven to be beneficial for improving the electrical conductivity of the mineral binder composition and providing hardened articles that can be heated by resistive heating.

Preferably, the carbonaceous particles are selected from any of the carbon materials with a dominating population of carbon atoms engaged in an sp² hybridization scheme.

Especially preferred, the carbonaceous particles are selected from carbon black, graphene flakes, multiwall carbon nanotubes, coke particles, and/or activated carbon. Highly preferred, the carbonaceous particles are selected from carbon black. Carbon black in particular is carbon black according to CAS 1333-86-4.

Such kind of carbonaceous particles, especially carbon black, turned out to be beneficial in combination with the carbon nanotubes, especially single-wall carbon nanotubes.

The carbonaceous particles preferably have a bulk density of 20 - 380 kg/m³, especially 50 - 150 kg/m³. The bulk density is defined as the mass of the many particles of the material divided by the total volume they occupy.

In particular, the carbonaceous particles have an average particle size of 10 - 500 nm, especially 20 - 300 nm, in particular 25 - 100 nm, particularly 30 - 70 nm or 40-60 nm.

Carbonaceous particles of such dimensions and properties have proven to be beneficial for the present invention, especially in combination with the carbon nanotubes.

According to a highly preferred embodiment, the carbonaceous particles are selected from carbon black, especially having a particle size of 25 - 100 nm, and the carbon nanotubes are single-walled carbon nanotubes, especially having a mean length of at least 5 µm and a mean diameter of about 1.2 - 2.0 nm.

Preferably, a proportion of the carbon nanotubes, in particular single-walled carbon nanotubes, is from 0.2 - 1000 ppm, preferably 1 - 900 ppm, more preferably 10 - 500 ppm, especially 100 - 400 ppm, with respect to the total weight of all of the dry components of the mineral binder composition. In the present context, "ppm" stands for parts-per-million (10⁻⁶) with respect to weight. Thus, 1 ppm equals 0.0001 wt.%.

In a highly preferred embodiment, the carbon nanotubes are used and/or provided in the form of a dispersion in a liquid, especially water. This helps to further distribute the nanotubes in the mineral binder composition in a highly efficient manner.

In particular, a proportion of the carbon nanotubes in the dispersion is from 0.01 - 2 wt.%, especially 0.1 - 1 wt.-% or 0.2 - 0.6 wt.%, with respect to the total weight of the dispersion.

Additionally, a dispersant might be preset in the dispersion, in particular an anionic surfactant, e.g. selected from alkylbenzene sulfonates, for example sodium dodecylbenzenesulfonate, and/or from alkylether sulfates, for example sodium laureth sulfate. In particular, a proportion of the dispersant in the dispersion is from 0.1 - 5 wt.%, especially 0.5 - 3 wt.-% or 1 - 2 wt.%, with respect to the total weight of the dispersion.

A proportion of the liquid, especially water, in the dispersion in particular is from 93 - 99.9 wt.%, especially 95 - 99 wt.%, in particular 97.5 - 98.5 wt.%, with respect to the total weight of the dispersion.

Preferably, a proportion of the dispersion is from 0.005 - 1 wt.%, especially 0.01 - 0.5 wt.%, for example 0.01 - 0.2 wt.% or 0.02 - 0.1 wt.%, with respect to the total weight of all of the dry components of the mineral binder composition.

A proportion of the carbonaceous particles, in particular carbon black, preferably is from 0.5- 10 wt.%, especially 2 - 6 wt.%, for example 3 - 5 wt.% or 3.5 - 4.5 wt.%, with respect to the total weight of all of the dry components of the mineral binder composition.

Especially, a weight ratio of the carbonaceous particles to the carbon nanotubes is from 10 - 1'250'000, especially 50 - 125'000, in particular 75 - 10'000 or 90 - 1'000.

In particular with such proportions of the carbon nanotubes and carbonaceous particles, the inventive advantages are realized.

In particular, a proportion of the carbonaceous particles and the carbon nanotubes are chosen such that a continuous percolating network of carbonaceous particles and carbon nanotubes is formed or present in the mineral binder composition. Put differently, in this case, the carbonaceous particles and the carbon nanotubes form a continuous percolating network in the mineral binder composition. This is especially the case when the mineral binder composition is in hardened state.

A percolating network is formed by the continuous connection of carbonaceous particles and carbon nanotubes that have percolated the mineral binder composition to a sufficient degree to make the composition electrically conductive. Percolation theory can be applied to explain the electrically conducting behavior of composites consisting of conducting particles and insulating matrices. When the content of carbonaceous particles and carbon nanotubes is gradually increased, the mineral binder composition undergoes an insulator-to-conductor transition. Percolation occurs when there is a pathway of carbonaceous particles and carbon nanotubes that can connect a source electrode with a drain electrode, allowing current to flow.

A "mineral binder" within the context of the present invention is a binder, in particular an inorganic binder, which reacts in the presence of water in a hydration reaction to solid hydrates or hydrate phases. This may be, for example, a hydraulic binder (e.g. cement or hydraulic lime), a latent hydraulic binder (e.g. slag or blastfurnace slag), a pozzolanic binder (e.g. fly ash, trass or rice husk ash), or a non-hydraulic binder (gypsum or white lime). Mixtures of the various binders are also possible.

In particular, the mineral binder comprises a hydraulic binder, preferably cement. Particularly preferred is a cement with a cement clinker content of 35 wt.%. Preferably, the cement is of the type CEM I, CEM II, CEM III, CEM IV, CEM V (according to standard EN 197-1) or a calcium aluminate cement (according to the standard EN 14647:2006-01) or a calcium sulphoaluminate cement or a mixture thereof. In particular, the cement is of the type CEM I, CEM II, calcium sulphoaluminate cement or a mixture thereof. Of course, cements produced according to relevant alternative standards, for example the relevant ASTM or Chinese standards, are likewise suitable. Furthermore, white cement can be used as a mineral binder of the present invention.

A proportion of the hydraulic binder in the total mineral binder is preferably at least 5 wt.-%, more preferably at least 20 wt.-%, still more preferably at least 35 wt.-%, in particular at least 65 wt.-%. According to a further advantageous embodiment, the mineral binder consists to at least 95% by weight of hydraulic binder, in particular of cement.

However, it can also be advantageous if the mineral binder comprises other binders in addition to or instead of a hydraulic binder. These are in particular latent hydraulic binders and/or pozzolanic binders. Suitable latent hydraulic and/or pozzolanic binders are e.g. slag, fly ash and/or silica fume. Likewise, the binder composition may include inert substances such as e.g. limestone powder, quartz powder and/or pigments.

Additionally, a mineral binder, especially a cement, of the present invention may comprise cement improvers chosen from the group consisting of grinding aids, strength improvers, activators, accelerators, plasticizers and superplasticizers. Cement improvers may be interground with the mineral binder during milling. They may likewise be admixed to the milled mineral binder.

Preferably, the mineral binder is selected from cement, hydraulic lime, fly ash, slag, silica fume, and/or gypsum.

In addition to the mineral binder, the mineral binder composition according to the invention preferably comprises aggregates and/or additives. If present, aggregates and/or additives are chemically and/or physically different from the carbonaceous particles and the carbon nanotubes.

Preferably, the mineral binder composition of the present invention comprises aggregates. Aggregates can be any material that is non-reactive in the hydration reaction of mineral binders. Aggregates can be any aggregate typically used for mineral binder compositions, especially cementitious binder compositions. Typical aggregates are for example rock, crushed stone, gravel, slag, sand, especially quartz sand, river sand and/or manufactured sand, recycled concrete, glass, expanded glass, pumice, perlite, vermiculite, and/or fine aggregates such as ground limestone, ground dolomite, ground aluminum oxide, silica fume, quartz flour and/or ground steel slag. Aggregates useful for the present invention can have any shape and size typically encountered for such aggregates.

The particle size of the aggregates depends on the application and can for example be in the range of 0.1 µm to 32 mm. Aggregate with different particle sizes are preferably mixed in order to optimize the properties of the mineral binder composition. It is also possible to use aggregates of different chemical composition.

According to embodiments, aggregates having particle sizes of not more than 8 mm, more preferably not more than 5 mm, still more preferably not more than 3.5 mm, most preferably not more than 2.2 mm, especially not more than 1.2 mm or not more than 1.0 mm are used in a mineral binder composition of the present invention.

The maximum particle size is limited in particular by the planned layer thickness during application of the mineral binder composition mixed with water. For example, a maximum particle size of the aggregate should be the same as the layer thickness during application.

According to embodiments, the mineral binder composition of the present invention comprises up to 85 wt.-%, preferably 30 - 80 wt.-%, more preferably 40 - 70 wt.-%, each based on the total dry weight of the mineral binder composition, of aggregates, preferably of sand, especially of quartz sand, and/or limestone.

According to embodiments, sand with a particle size of less than 1 mm, preferably less than 0.8 mm is used for a mineral binder composition of the present invention.

Mineral binder compositions with aggregates of this type and mixed with water can be readily conveyed, are readily mixed with an additive, and give a very homogeneous mineral binder matrix and surface after application. Furthermore, this helps to obtain a homogenous distribution of the carbon nanotubes and the carbonaceous particles.

A mineral binder composition advantageously further comprises additives common in the mortar and/or concrete industry such as for example dispersants, plasticizers, superplasticizers, accelerators, retarders, rheology modifiers, thickeners, anti-settling agents, pigments, corrosion inhibitors, fibers, strength enhancers, waterproofing additives, alkali-aggregate reaction inhibitors, chromate reducers, and/or anti-microbial agents. It can be advantageous to combine two or more of the mentioned additives in one mineral binder composition.

Especially, a proportion of additives is form 0 - 10 wt.-%, preferably 0.1 - 7 wt.-%, more preferably 0.2 - 5 wt.-%, based on the total dry weight of the mineral binder composition.

According to embodiments, a mineral binder composition of the present invention comprises a dispersant and/or superplasticizer selected from the group consisting of lignosulfonates, sulfonated vinylcopolymers, polynaphthalene sulfonates, sulfonated melamine formaldehyde condensates, polyethylene oxide phosphonates, polycarboxylate ethers (PCE), or mixtures thereof. Preferably, a mineral binder composition of the present invention comprises a PCE.

Such additives are inter alia beneficial to obtain a homogeneous distribution of the components of the mineral binder composition, in particular of the carbon nanotubes and the carbonaceous particles.

According to embodiments, the PCE comprises carboxylic acid groups in the form of free, that is not neutralizedcarboxylic acid groups and / or in the form of their alkali and / or alkaline earth metal salts. Preference is given to a PCE, which, apart from the carboxylic acid groups, no longer has any further anionic groups. Further preferred is a PCE whose side chains consist of at least 80 mol%, preferably at least 90 mol%, especially preferably 100 mol%, of ethylene glycol units. Preferably, the side chains have an average molecular weight Mw in the range of 500 to 10'000 g/mol, preferably 800 to 8'000 g/mol, especially preferably 1'000 to 5'000 g/mol. Side chains of different molecular weights may also be present in the PCE. Most preferably, the PCE is composed of (meth)acrylic acid and methyl polyalkylene glycol (meth)acrylates. The PCE preferably has an average molecular weight M_{w} of 8'000 to 200'000 g/mol, especially 10'000 to 100'000 g/mol, measured against PEG standards.

According to particularly preferred embodiments, a mineral binder composition of the present invention comprises:
a) 10 - 65 wt.-%, preferably 12 - 55 wt.-%, especially 15 - 50 wt.-% of the at least one mineral binder;
b) 0.2 - 1000 ppm, preferably 1 - 900 ppm, more preferably 10 - 500 ppm, especially 100 - 400 ppm, of the carbon nanotubes;
c) 0.5 - 10 wt.%, especially 2 - 6 wt.%, for example 3 - 5 wt.% or 3.5 - 4.5 wt.%; of the carbonaceous particles;
d) 0 - 85 wt.-%, preferably 30 - 80 wt.-%, more preferably 40 - 70 wt.-% of aggregates, preferably of sand and/or gravel;
e) 0 - 10 wt.-%, preferably 0.1 - 7 wt.-%, more preferably 0.2 - 5 wt.-% of at one or more additives selected from the group consisting of dispersants, plasticizers, superplasticizers, accelerators, retarders, rheology modifiers, thickeners, anti-settling agents, pigments, corrosion inhibitors, fibers, strength enhancers, waterproofing additives, alkali-aggregate reaction inhibitors, chromate reducers, and/or anti-microbial agents, and
f) optionally mixing water, especially with a ratio of water to mineral binder of 0.25 - 0.8;
each based on the total dry weight of the mineral binder composition, except for the mixing water.

Especially, the mineral binder composition is a mortar, a concrete, a screed, a sealant and/or a grout composition.

In particular, the mineral binder composition is a screed composition, especially a self-levelling screed composition. Such compositions can directly be used to produce for example an anti-static floor and/or a floor with integrated heating capability.

Especially, the mineral binder composition is a dry composition. A "dry composition" within the present context refers to a mineral binder composition with a moisture content of not more than 0.5 wt.-%, based on the total weight of the mineral binder composition. In this case, no mixing water is present.

In another embodiment, the mineral binder composition is a processable composition comprising mixing water. In this case, especially, a ratio of water to mineral binder in the mineral binder composition is 0.25 - 0.7.

A further aspect of the invention relates to a method of producing a hardened article comprising the steps of:
(i) mixing a mineral binder composition of the present invention with water
(ii) placing the mixture obtained in step (i) into any desired shape
(iii) curing the placed mixture obtained in step (ii).

A ratio of water to mineral binder of the mineral binder composition in step (i) preferably is chosen in the range of is 0.25 - 0.7.

Especially, in step (i) the nanotubes are mixed with the other components of the mineral binder composition and/or the water in the form of a dispersion as described above.

In particular, during step (iii) an electrical current is passed through the placed mixture for resistively heating the placed mixture during the curing process. This will accelerate the curing process.

Thereby, for example, for passing the electrical current through the placed mixture, a voltage of 1 - 100 V, especially 20 - 60 V, in particular 30 - 50 V, can e.g. be applied between opposite sites of the placed mixture, in particular via electrodes, especially graphite electrodes.

A further aspect of the present invention is directed to a hardened article comprising a hardened mineral binder composition as described above and/or obtainable by hardening a mineral binder composition as described above with water. Thereby, the carbonaceous particles and the carbon nanotubes preferably form a continuous percolating network as described above.

In particular, the hardened article is or it forms part of a runway, a roadway, a walkway, a staircase, a floor, a wall, a ceiling, a roof or a supporting structure of a building or an infrastructure constructions.

Especially, the hardened article is or it forms part of a floor, especially a screed, in a building. For example, the shaped body is or forms part of an anti-static and/or electrically heatable floor.

In another preferred embodiment, the hardened article is or it forms part of an electrical component, especially of an electrical capacitor, in particular a supercapacitor. A supercapacitor, also called an ultracapacitor, is a high-capacity capacitor, with a capacitance much higher than other capacitors but with lower voltage limits. It bridges the gap between electrolytic capacitors and rechargeable batteries.

For example, the hardened article is a capacitor electrode.

The electrical component or the capacitor can e.g. be used for energy storage. Thus, another aspect of the invention is related to an object selected from a runway, a roadway, a walkway, a staircase, a floor, a wall, a ceiling, a roof or a supporting structure of a building or an infrastructure construction comprising or consisting of a hardened mineral binder composition as described above or a hardened article as described above.

Furthermore, the invention is related to a capacitor, especially a supercapacitor, comprising at least one capacitor electrode comprising or consisting of a hardened article as described herein.

Especially, the capacitor comprises at least two capacitor electrodes comprising or consisting of a hardened article as described herein, separated by a dielectric medium. The dielectric medium in particular is a porous medium permeable to electrolyte species, e.g. paper and/or cement.

However, the capacitor can also be based on a capacitor electrode comprising or consisting of a hardened article as described herein and at least one further capacitor electrode of a different material, e.g. metal or soil.

Especially, the capacitor can be part of a building or an infrastructure construction.

In particular, the hardened article or the object has an electrical resistivity at 20°C from 10⁻⁶ Ωm to less than 10⁴ Ωm, especially from 10⁻⁴ Ωm to 10³ Ωm. Especially, the hardened article has an electrical resistivity of less than 1'000 Ωm, especially less than 500 Ωm, in particular less than 100 Ωm. The electrical resistivity is in particular measured after 28 days of hardening.

For measuring electrical resistivity, the samples can e.g. be sandwiched between conductive electrodes, especially graphite electrodes, connected to a DC power source. Upon application of a voltage and by using Ohm's law and the geometric dimensions of the sample, the electrical resistivity (= reciprocal of electrical conductivity) can be determined.

Furthermore, the invention is related to a method for heating a hardened article or an object as described above, whereby an electrical current is passed through the hardened article or the object such that the hardened article or the object is heated by resistive heating.

Thereby, preferably, the electrical current is passed through the hardened article or the object by applying a voltage of 1 - 100 V, especially 20 - 60 V, in particular 30 - 50 V, e.g. between opposite sites of the hardened article or the object, in particular via electrodes, especially graphite electrodes.

A still further aspect of the invention is directed to the use of a mineral binder composition or a hardened article as described above for structural monitoring, electromagnetic shielding, electrostatic discharge protection, corrosion protection of steel reinforcement concrete structures, as an anti-static flooring, as a heating element for buildings or infrastructure constructions, as an element of an electrical capacitor, especially of a supercapacitor, in particular as a capacitor electrode, and/or for storage of electrical energy.

Also, the invention is related to the use of carbon nanotubes and carbonaceous particles for reducing the electrical resistivity of a mineral binder composition, whereby the carbonaceous particles being chemically and/or physically different from the carbon nanotubes.

Special features and embodiments described above in connection with the inventive mineral binder composition are advantageously also realized in the aforementioned hardened articles, objects, methods and uses.

Further advantageous implementations of the invention are evident from the exemplary embodiments. The examples are not intended to limit the scope of the invention in any way.

### Brief description of drawings

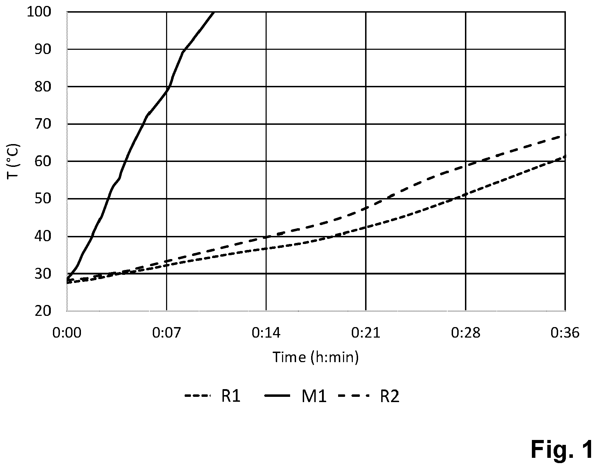

Fig. 1 shows a comparison of the temperature evolution an inventive mineral binder composition versus two reference compositions.

### Exemplary embodiments

### Mortar mixtures

For producing a dry mortar mixture **M1** according to the invention, 490 g cement (CEM I 52.5), 1'350 g quartz sand (CEN) and 1 g of a superplasticizer (polycarboxylate ether) were mixed together with 3.6 wt.% carbon black (Vulcan XC72R; available from Cabot Corporation; mean particle size: 50 nm) and 400 ppm of single-wall carbon nanotubes (used in the form of an aqueous dispersion of single-wall carbon nanotubes (OCSiAL Tuball ^{™} Coat_E H₂O 0.4% (sodium dodecylbenzenesulfonate); available from OCSiAl Europe; outer mean diameter: 1.6 nm; mean length > 5 µm; G/D ratio > 90). The amount of the nanotubes added was 400 ppm. All wt.% and ppm are with respect to the total weight of all of the dry components of the mineral binder composition.

As a first reference mortar mixture **R1,** the same type of cement, quartz sand and plasticizer as used for mixture **M1** were mixed with 4.5 wt.% carbon black (Vulcan XC72R). In this case, no carbon nanotubes were added. However, the proportions of cement, sand and plasticizer were kept identical to mixture **M1.**

As a second reference mortar mixture **R2,** the same type of cement, quartz sand and superplasticzer as used for mixture **M1** were mixed with 900 ppm of single-wall carbon nanotubes (used in the form of an aqueous dispersion of single-wall carbon nanotubes (OCSiAL Tuball ^{™} Coat_E H₂O 0.4% (sodium dodecylbenzenesulfonate)). The amount of the nanotubes added was 900 ppm. In this case, no carbon black was added. Again, the proportions of cement, sand and superplasticizer were kept identical to mixture **M1.**

The mortar mixtures were mixed in a Hobart mixer with mixing water (w/c = 0.6) and cured in the form of cuboid specimens (4 × 4 × 16 cm) to obtain hardened mortar samples.

### Thermo-electrical tests

The hardened mortar samples were sandwiched between conductive graphite electrodes, connected to a DC power source. Then a voltage of 40 V was applied to the electrodes to resistively heating the samples. The temporal evolution of the temperature of the samples was measured with a thermographic camera.

Fig. 1 shows the temperature evolution of the three samples. As evident, the sample based on the inventive mortar composition **M1** reached temperature of 100°C within a about 10 min. In contrast, the reference samples based on compositions **R1** and **R2** only reached a temperature of about 60-70°C within 36 min.

Evidently, the carbon black and the carbon nanotubes in the inventive mortar composition **M1** synergistically interact when compared to the other samples comprising only one of the two carbon-based materials.

Therefore, the with the inventive mortar composition it is possible to produce electrically conductive hardened articles that can be heated in a highly efficient manner with a rather high heating speed. Furthermore, the mortar compositions easily can be adjusted to specific processing needs and desired properties by adjusting the formulation of the mineral binder compositions.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

1. Mineral binder composition, especially an electrically conductive mineral binder composition, comprising at least one mineral binder, carbon nanotubes and carbonaceous particles, the carbonaceous particles being chemically and/or physically different from the carbon nanotubes.

2. Mineral binder composition according to claim 1, whereby the carbon nanotubes are single-wall carbon nanotubes.

3. Mineral binder composition according to any of preceding claims, whereby the carbon nanotubes have an outer mean diameter of about 0.4-25 nm, especially 0.6 - 10 nm, for example 1 - 5 nm, in particular 1.2 - 2.0 nm; and whereby the carbon nanotubes have a mean length of at least 0.5 µm, especially of at least 1 µm, in particular of at least 4 µm, especially of at least 5 µm .

4. Mineral binder composition according to any of preceding claims, whereby the carbonaceous particles are selected from carbon black, graphene flakes, multiwall carbon nanotubes, coke particles, and/or activated carbon.

5. Mineral binder composition according to any of preceding claims, whereby the carbonaceous particles are selected from carbon black.

6. Mineral binder composition according to any of preceding claims, whereby the carbonaceous particles have an average particle size of 10 - 500 nm, especially 20 - 300 nm, in particular 25 - 100 nm, particularly 30 - 70 nm or 40-60 nm.

7. Mineral binder composition according to any of preceding claims, whereby the carbonaceous particles are selected from carbon black, especially having a particle size of 25 - 100 nm, and the carbon nanotubes are single-walled carbon nanotubes, especially having a mean length of at least 5 µm and a mean diameter of about 1.2 - 2.0 nm.

8. Mineral binder composition according to any of preceding claims, whereby a proportion of the carbon nanotubes, in particular single-walled carbon nanotubes, is from 0.2 - 1000 ppm, preferably 1 - 900 ppm, more preferably 10 - 500 ppm, especially 100 - 400 ppm, with respect to the total weight of all of the dry components of the mineral binder composition; and a proportion of the carbonaceous particles, in particular carbon black, is from 0.5 - 10 wt.%, especially 2 - 6 wt.%, for example 3 - 5 wt.% or 3.5 - 4.5 wt.%, with respect to the total weight of all of the dry components of the mineral binder composition.

9. Mineral binder composition according to any of preceding claims, whereby a proportion of the carbonaceous particles and the carbon nanotubes are chosen such that a continuous percolating network of carbonaceous particles and carbon nanotubes is present.

10. Mineral binder composition according to any of preceding claims whereby the at least one mineral binder is selected from cement, hydraulic lime, fly ash, slag, silica fume, and/or gypsum.

11. Mineral binder composition according to any of preceding claims comprising:
a) 10 - 65 wt.-%, preferably 12 - 55 wt.-%, especially 15 - 50 wt.-% of the at least one mineral binder;
b) 0.2 - 1000 ppm, preferably1 - 900 ppm, more preferably 10 - 500 ppm, especially 100 - 400 ppm, of the carbon nanotubes;
c) 0.5 - 10 wt.%, especially 2 - 6 wt.%, for example 3-5 wt.% or 3.5 - 4.5 wt.%; of the carbonaceous particles;
d) 0 - 85 wt.-%, preferably 30 - 80 wt.-%, more preferably 40 - 70 wt.-% of aggregates, preferably of sand and/or gravel;
e) 0 - 10 wt.-%, preferably 0.1 - 7 wt.-%, more preferably 0.2 - 5 wt.-% of one or more additives selected from the group consisting of dispersants, plasticizers, superplasticizers, accelerators, retarders, rheology modifiers, thickeners, anti-settling agents, pigments, corrosion inhibitors, fibers, strength enhancers, waterproofing additives, alkali-aggregate reaction inhibitors, chromate reducers, and/or anti-microbial agents, and
f) optionally water, especially with a ratio of water to mineral binder of 0.25 - 0.8;
each based on the total dry weight of the mineral binder composition.

12. Hardened article comprising a hardened mineral binder composition according to any of preceding claims and/or obtainable by hardening a mineral binder composition according to any of preceding claims with water.

13. Object selected from a runway, a roadway, a walkway, a staircase, a floor, a wall, a ceiling, a roof or a supporting structure of a building or an infrastructure construction, comprising or consisting of a hardened mineral binder composition according to any of claims 1 - 11 or a hardened article according to claim 12.

14. Method for heating a hardened article according to claim 12 or an object according to claim 13, whereby an electrical current is passed through the hardened article or the object, in particular such that the hardened article or the object is heated by resistive heating.

15. Use of a mineral binder composition according to any of claims 1 - 11 or of a hardened article according to claim 12 for structural monitoring, electromagnetic shielding, electrostatic discharge protection, corrosion protection of steel reinforcement concrete structures, as an anti-static flooring, as a heating element for buildings or infrastructure constructions, as an element of an electrical capacitor, especially of a supercapacitor, in particular as a capacitor electrode, and/or for storage of electrical energy.
